# EUROPEAN PATENT SPECIFICATION

(11) **EP 2 643 375 B1**
(45) Date of publication and mention of the grant of the patent: **27.08.2014**
(21) Application number: 11785423.2
(22) Date of filing: 21.11.2011
(51) Int. Cl.: C08G 18/08, C08G 18/12, C08G 18/67, C08G 18/72, C09J 175/16, A43B 13/32, C08J 5/12, C08G 18/75

(54) **USE OF AQUEOUS DISPERSIONS AS PRIMERS**
VERWENDUNG WÄSSRIGER DISPERSIONEN ALS GRUNDIERUNG
UTILISATION DE DISPERSIONS AQUEUSES EN TANT QU'AMORCES

(30) Priority: 26.11.2010 WO PCT/CN2010/001898; 11.03.2011 EP 11157800
(43) Date of publication of application: 02.10.2013
(73) Proprietor: Bayer Intellectual Property GmbH, 40789 Monheim am Rhein (DE)
(72) Inventor: ARNDT, Wolfgang, 41542 Dormagen (DE); LÜHMANN, Erhard, 29699 Bomlitz (DE); SOMMER, Stefan, 51375 Leverkusen (DE); WEIKARD, Jan, 51375 Leverkusen (DE); BAI, Lucy, Shanghai 200237 (CN); SUM, Jane, Shanghai 200040 (CN); ZHAO, Henry, Guangzhou 510060 (CN)
(74) Representative: BIP Patents
(86) International application number: PCT/EP2011/070557
(87) International publication number: WO 2012/069412

(56) References cited:
- EP-A1- 0 910 965
- EP-A1- 2 105 452
- WO-A1-97/19121
- WO-A1-2008/043723
- WO-A2-2006/138557

## Description

The present invention relates to a method for joining articles using aqueous UV-reactive primers for the coating of substrates based on ethylene vinyl acetate copolymers (EVA copolymers) or rubber.

Heat-activatable adhesives based on aqueous polymer dispersions are becoming increasingly widespread because they can be used to produce thin adhesive layers simply and quickly without considerable amounts of volatile organic compounds such as solvents being released in the process. Polyurethane dispersions in particular meet the highest demands in respect of the load capacity of the adhesive bonds that are to be produced. Heat activation leads to melting of the crystalline or semi-crystalline polyurethane polymers, which become tacky and crystallise again after joining and thus contribute to the strength of the bond.

Aqueous polyurethane dispersions have the disadvantage, however, that they do not adhere or adhere only unsatisfactorily to various materials which are frequently used, for example, in the manufacture of shoes as soles or midsoles. In order to improve the adhesion, the materials to be coated are pretreated, for example by treatment with chlorine or ozone, plasma irradiation or treatment with aggressive primers containing organic solvents in combination with UV irradiation [J. Adhesion Sci. Technol., Vol. 19, No. 1, pp. 19-40, 2005].
EP 2 105 452 describes an aqueous polyurethane composition containing an aqueous urethane resin, a ethylenically unsaturated monomer and a photo-initiator for use as coating, adhesive, primer or ink.
WO 97/19121 deals with an aqueous composition comprising a urethane resin, an ethylenically unsaturated monomer and a heat activated initiator. The composition can be used as a coating, primer or adhesive in particular in the field of footwear.

All those processes require the use of complex process steps or devices and/or toxic or harmful chemicals. Aqueous lacquers which are based on polyurethane dispersions and cure by thermal drying and UV light are known, for example, from DE-A 100 38 958. However, those products are preferably used on porous, absorbent substrates such as wood. Unusually good adhesion to plastics materials - in particular to EVA copolymers having a low vinyl acetate content or to rubber - is not described for aqueous lacquers which cure by means of UV light.

It was an object of the present invention, therefore, to provide a process for joining articles which allows aqueous dispersions containing at least one polymer selected from the group consisting of polyurethanes, polyureas and polyurethane-polyureas to be used as primers without requiring the use of toxic or harmful substances.

It has been found, surprisingly, that by combining ethylenically unsaturated monomers which can be polymerised using UV light with polyurethane dispersions which can likewise carry UV-polymerisable groups, it is possible to prepare primers which, after drying and UV irradiation, adhere well to substrates such as, for example, EVA copolymers and rubber without the use of organic solvents.

The present invention accordingly involves a method for joining articles comprising compounds selected from the group consisting of ethylene vinyl acetate copolymers, rubber, polyolefins and mixtures thereof, comprising at least the following steps
I) coating an article with an aqueous dispersion comprising
   a) at least one polymer selected from the group consisting of polyurethanes, polyureas and polyurethane-polyureas,
   b) at least one ethylenically unsaturated compound and
   c) at least one photoinitiator
      as primer;
II) removing water;
III) irradiating with actinic radiation;
IV) coating the article with an adhesive;
V) removing water;
VI) bringing the article into contact with itself or with a further article which has optionally been treated according to method steps I) to V) or IV) to V).

In principle, the primer according to the invention is suitable for any substrates that are to be bonded. It is used in particular with substrates to which conventional aqueous, heat-activatable adhesives adhere only unsatisfactorily and whose surface properties are so modified by the primer that the mentioned adhesives adhere well. Examples are ethylene vinyl acetate copolymer (EVA), for example Phylon®, compression moulded EVA, die cut EVA, but also rubber such as SBR (styrene butadiene rubber), NBR (nitrile butadiene rubber), TR (thermoplastic rubber), natural rubber, EPDM (ethylene-propylene-diene rubber), polyolefins and other thermoplastic materials, and mixtures thereof.

Preferably, the substrate is a substrate selected from the group consisting of ethylene vinyl acetate copolymers and rubber. Particularly preferably, the substrate is an ethylene vinyl acetate copolymer. Most particular preference is given to a substrate which contains EVA, the EVA having a vinyl acetate content in the range of preferably from 8 to 28 wt.%, particularly preferably from 14 to 22 wt.% vinyl acetate.

The aqueous primer contains at least one polymer selected from the group of the polyurethanes, polyureas or polyurethane-polyureas. Corresponding polymers are known as aqueous dispersions and are available on an industrial scale. They are generally referred to as polyurethane dispersions (PUD).

The polyurethane, polyurea and polyurethane-polyurea polymers contain as chain-extension components:
(A) at least one diol and/or polyol component
(B) at least one di- and/or poly-isocyanate component
(C) at least one component containing at least one hydrophilising group
(D) optionally mono-, di- and/or tri-amino-functional and/or hydroxyamino-functional compounds and
(E) optionally other isocyanate-reactive compounds.

Suitable diol and/or polyol components A) are compounds having at least two hydrogen atoms reactive towards isocyanates and a mean molecular weight of preferably from 62 to 18,000 g/mol, particularly preferably from 62 to 4000 g/mol. Examples of suitable chain-extension components are polyethers, polyesters, polycarbonates, polylactones and polyamides. Preferred polyols A) contain preferably from 2 to 4, particularly preferably from 2 to 3 hydroxyl groups, most particularly preferably 2 hydroxyl groups. Mixtures of various compounds of that type are also suitable.

There come into consideration as polyester polyols in particular linear polyester diols or also weakly branched polyester polyols, as can be prepared in known manner from aliphatic, cycloaliphatic or aromatic di- or poly-carboxylic acids, such as, for example, succinic, methylsuccinic, glutaric, adipic, pimelic, suberic, azelaic, sebacic, nonanedicarboxylic, decanedicarboxylic, terephthalic, isophthalic, o-phthalic, tetrahydrophthalic, hexahydrophthalic, cyclohexanedicarboxylic, maleic, fumaric, malonic or trimellitic acid, and acid anhydrides, such as o-phthalic, trimellitic or succinic anhydride, or mixtures thereof, with polyhydric alcohols, such as, for example, ethanediol, di-, tri-, tetra-ethylene glycol, 1,2-propanediol, di-, tri-, tetra-propylene glycol, 1,3-propanediol, 1,4-butanediol, 1,3-butanediol, 2,3-butanediol, 1,5-pentanediol, 1,6-hexanediol, 2,2-dimethyl-1,3-propanediol, 1,4-dihydroxycyclohexane, 1,4-dimethylolcyclohexane, 1,8-octanediol, 1,10-decanediol, 1,12-dodecanediol or mixtures thereof, optionally with the concomitant use of higher-functional polyols, such as trimethylolpropane, glycerol or pentaerythritol. As polyhydric alcohols for the preparation of the polyester polyols there are naturally suitable also cycloaliphatic and/or aromatic di- and poly-hydroxyl compounds. Instead of the free polycarboxylic acid, the corresponding polycarboxylic acid anhydrides or corresponding polycarboxylic acid esters of lower alcohols or mixtures thereof can also be used to prepare the polyesters.

The polyester polyols can, of course, also be homopolymers or mixed polymers of lactones, which are preferably obtained by adding lactones or lactone mixtures, such as butyrolactone, ε-caprolactone and/or metlayl-ε-caprolactone, to suitable di- and/or higher-functional starter molecules, such as, for example, the low molecular weight, polyhydric alcohols mentioned above as chain-extension components for polyester polyols. The corresponding polymers of ε-caprolactone are preferred.

Polycarbonates containing hydroxyl groups also come into consideration as polyhydroxyl components A), for example those which can be prepared by reaction of diols, such as 1,4-butanediol and/or 1,6-hexanediol, with diaryl carbonates, such as, for example, diphenyl carbonate, dialkyl carbonates, such as, for example, dimethyl carbonate, or phosgene. The at least partial use of polycarbonates containing hydroxyl groups enables the hydrolytic stability of the polyurethane or polyurethane-urea dispersion adhesives to be improved.

There are suitable as polyether polyols, for example, the polyaddition products of styrene oxides, ethylene oxide, propylene oxide, tetrahydrofuran, butylene oxide, epichlorohydrin, and their mixed addition and graft products, as well as the polyether polyols obtained by condensation of polyhydric alcohols or mixtures thereof and those obtained by alkoxylation of polyhydric alcohols, amines and amino alcohols. Polyether polyols suitable as chain-extension components A) are the homopolymers, mixed polymers and graft polymers of propylene oxide and ethylene oxide, which are obtainable by addition of the mentioned epoxides to low molecular weight diols or triols, as mentioned above as chain-extension components for polyester polyols, or to higher-functional low molecular weight polyols, such as, for example, pentaerythritol or sugars, or to water.

Suitable components A) are likewise low molecular weight diols, triols and/or tetraols, such as, for example, ethanediol, di-, tri- and tetra-ethylene glycol, 1,2-propanediol, di-, tri-, tetra-propylene glycol, 1,3-propanediol, 1,4-butanediol, 1,3-butanediol, 2,3-butanediol, 1,5-pentanediol, 1,6-hexanediol, 2,2-dimethyl-1,3-propanediol, 1,4-dihydroxycyclohexane, 1,4-dimethylcyclohexane, 1,8-octanediol, 1,10-decanediol, 1,12-dodecanediol, neopentyl glycol, 1,4-cyclohexanediol, 1,4-cyclohexanedimethanol, 1,4-, 1,3-, 1,2-dihydroxybenzene or 2,2-bis-(4-hydroxyphenyl)-propane (bisphenol A), TCD-diol, trimethylolpropane, glycerol, pentaerythritol, dipentaerythritol, or mixtures thereof, optionally with the concomitant use of further diols or triols which have not been mentioned.

There can also be used as polyols reaction products of the mentioned polyols, in particular of the low molecular weight polyols, with ethylene oxide and/or propylene oxide.

The low molecular weight components A) have a molecular weight of preferably from 62 to 400 g/mol and are preferably used in combination with the above-described polyester polyols, polylactones, polyethers and/or polycarbonates.

Polyol component A) is present in the polyurethane according to the invention in amounts of preferably from 20 to 95 wt.%, particularly preferably from 30 to 90 wt.% and most particularly preferably from 65 to 90 wt.%.

There are suitable as component B) any desired organic compounds which contain at least two free isocyanate groups per molecule. Preference is given to the use of diisocyanates Y(NCO)₂, wherein Y represents a divalent aliphatic hydrocarbon radical having from 4 to 12 carbon atoms, a divalent cycloaliphatic hydrocarbon radical having from 6 to 15 carbon atoms, a divalent aromatic hydrocarbon radical having from 6 to 15 carbon atoms or a divalent araliphatic hydrocarbon radical having from 7 to 15 carbon atoms. Examples of such diisocyanates which are preferably to be used are tetramethylene diisocyanate, methylpentamethylene diisocyanate, hexamethylene diisocyanate, dodecamethylene diisocyanate, 1,4-diisocyanato-cyclohexane, 1-isocyanato-3,3,5-trimethyl-5-isocyanatomethyl-cyclohexane (= IPDI, isophorone diisocyanate), 4,4'-diisocyanato-dicyclohexyl-methane, 4,4'-diisocyanato-dicyclohexylpropane-(2,2), 1,4-diisocyanatobenzene, 2,4-diisocyanato-toluene, 2,6-diisocyanatotoluene, 4,4'-diisocyanato-diphenylmethane, 2,2'- and 2,4'-diisocyanato-diphenylmethane, tetramethylxylylene diisocyanate, p-xylylene diisocyanate, p-isopropylidene diisocyanate, as well as mixtures consisting of those compounds.

In addition to those simple diisocyanates, polyisocyanates that contain heteroatoms in the radical linking the isocyanate groups and/or that have a functionality of more than 2 isocyanate groups per molecule are also suitable. The former are, for example, polyisocyanates composed of at least two diisocyanates and having a uretdione, isocyanurate, urethane, allophanate, biuret, carbodiimide, iminooxadiazinedione and/or oxadiazinetrione structure, prepared by modification of simple aliphatic, cycloaliphatic, araliphatic and/or aromatic diisocyanates. 4-Isocyanatomethyl-1,8-octane diisocyanate (nonane triisocyanate) may be mentioned as an example of an unmodified polyisocyanate having more than 2 isocyanate groups per molecule.

Preferred diisocyanates B) are hexamethylene diisocyanate (= HDI), dodecamethylene diisocyanate, 1,4-diisocyanato-cyclohexane, 1-isocyanato-3,3,5-trimethyl-5-isocyanatomethyl-cyclohexane (= IPDI), 4,4'-diisocyanato-dicyclohexyl-methane, 2,4-diisocyanatotoluene, 2,6-diisocyanatotoluene, 4,4'-diisocyanato-diphenylmethane, 2,2'- and 2,4'-diisocyanatodiphenylmethane, as well as mixtures consisting of those compounds.

Particularly preferred components B) are hexamethylene diisocyanate and 1-isocyanato-3,3,5-trimethyl-5-isocyanatomethyl-cyclohexane.

Component B) is present in the polyurethane according to the invention in amounts of from 5 to 60 wt.%, preferably from 6 to 45 wt.% and particularly preferably in amounts of from 7 to 25 wt.%.

Suitable components C) are, for example, components containing sulfonate or carboxylate groups, such as, for example, diamino compounds and dihydroxy compounds which additionally carry sulfonate and/or carboxylate groups, such as, for example, the sodium, lithium, potassium, tert-amine salts of N-(2-aminoethyl)-2-aminoethanesulfonic acid, of N-(3-aminopropyl)-2-aminoethanesulfonic acid, of N-(3-aminopropyl)-3-aminopropanesulfonic acid, of N-(2-aminoethyl)-3-aminopropane-sulfonic acid, of the analogous carboxylic acids, of dimethylolpropionic acid, of dimethylolbutyric acid, of the reaction products within the context of a Michael addition of 1 mol of diamine, such as, for example, 1,2-ethanediamine or isophoronediamine, with 2 mol of acrylic acid or maleic acid.

The acids are frequently used directly in their salt form as sulfonate or carboxylate. It is, however, also possible to add some or all of the neutralising agents necessary for salt formation during or after the preparation of the polyurethanes.

Tertiary amines that are particularly suitable and preferred for the salt formation are, for example, triethylamine, dimethylcyclohexylamine, ethyldiisopropylamine. It is also possible to use other amines for the salt formation, such as, for example, ammonia, diethanolamine, triethanolamine, dimethylethanolamine, methyldiethanolamine, aminomethylpropanol and also mixtures of the mentioned and also of other amines. These amines are expediently not added until after formation of the prepolymer.

It is also possible to use other neutralising agents, such as, for example, sodium, potassium, lithium, calcium hydroxide, for neutralisation purposes.

Further suitable components C) are mono- or di-functional polyethers having a non-ionic hydrophilising action which are based on ethylene oxide polymers or ethylene oxide/propylene oxide copolymers started on alcohols or amines, such as, for example, polyether LB 25 (Bayer MaterialScience AG; Germany) or MPEG 750: methoxypolyethylene glycol, molecular weight 750 g/mol (e.g. Pluriol® 750, BASF AG, Germany).

Preferred components C) are N-(2-aminoethyl)-2-aminoethanesulfonate and the salts of dimethylpropionic acid and of dimethylolbutyric acid.

Component C) is present in the polyurethane according to the invention in amounts of preferably from 0.1 to 15 wt.%, particularly preferably from 0.5 to 10 wt.%, most particularly preferably from 0.8 to 5 wt.% and yet more preferably from 0.9 to 3.0 wt.%.

Suitable components D) are mono-, di-, tri-functional amines and/or mono-, di-, tri-functional hydroxyamines, such as, for example, aliphatic and/or alicyclic primary and/or secondary monoamines, such as ethylamine, diethylamine, the isomeric propyl- and butyl-amines, higher linear-aliphatic monoamines and cycloaliphatic monoamines, such as cyclohexylamine. Further examples are amino alcohols, that is to say compounds which contain amino and hydroxyl groups in a molecule, such as, for example, ethanolamine, N-methylethanolamine, diethanolamine, diisopropanolamine, 1,3-diamino-2-propanol, N-(2-hydroxyethyl)-ethylenediamine, N,N-bis(2-hydroxyethyl)-ethylenediamine and 2-propanolamine. Further examples are diamines and triamines, such as, for example, 1,2-ethanediamine, 1,6-hexamethylenediamine, 1-amino-3,3,5-trimethyl-5-aminomethyl-cyclohexane (isophoronediamine), piperazine, 1,4-diaminocyclohexane, bis-(4-aminocyclohexyl)-methane and diethylenetriamine. Adipic acid dihydrazide, hydrazine and hydrazine hydrate are also suitable. Of course, mixtures of several of the mentioned compounds D), optionally together with compounds D) which have not been mentioned, can also be used.

Preferred components D) are 1,2-ethanediamine, 1-amino-3,3,5-trimethyl-5-aminomethyl-cyclohexane, diethylenetriamine, diethanolamine, ethanolamine, N-(2-hydroxyethyl)-ethylenediamine and N,N-bis(2-hydroxyethyl)-ethylenediamine.

Components D) preferably serve, as chain extenders, to build up higher molecular weights or, as monofunctional compounds, to limit molecular weights and/or optionally additionally to incorporate further reactive groups, such as, for example, free hydroxyl groups, as further crosslinking sites.

Component D) is present in the polyurethane according to the invention in amounts of preferably from 0 to 10 wt.%, particularly preferably from 0 to 5 wt.% and most particularly preferably in amounts of from 0.2 to 3 wt.%.

Components E) which are optionally to be used concomitantly can be, for example, aliphatic, cycloaliphatic or aromatic monoalcohols having from 2 to 22 carbon atoms, such as ethanol, butanol, hexanol, cyclohexanol, isobutanol, benzyl alcohol, stearyl alcohol, 2-ethylethanol, and blocking agents which are conventional for isocyanate groups and can be removed again at elevated temperatures, such as, for example, butanoneoxime, dimethylpyrazole, caprolactam, malonic esters, triazole, dimethyl-triazole, tert-butyl-benzylamine, cyclopentanonecarboxyethyl esters.

Components E) can be present in the polyurethane according to the invention in amounts of preferably from 0 to 20 wt.%, most preferably from 0 to 10 wt.%.

The concomitant use of component E) can lead, for example, to polyurethane dispersions according to the invention which contain further reactive groups in addition to the reactive carboxyl groups, which permits, for example, the use of different crosslinking mechanisms (dual cure) in order to achieve special properties, such as, for example, two-stage, optionally staggered curing or a particularly high crosslinking density.

In a preferred embodiment of the present invention, the primer contains at least one crystalline or semi-crystalline polyurethane or polyurethane-polyurea polymer.

Crystalline or semi-crystalline means in this connection that in the DSC measurement according to DIN 65467 at a heating rate of 20 K/min, the polymer has a melting peak which corresponds to a melt enthalpy > 3 J/g, preferably > 15 J/g, particularly preferably > 30 J/g, most particularly preferably > 50 J/g. The melting peak is caused by the melting of regular partial structures in the polymer.

The crystalline or semi-crystalline polyurethane or polyurethane-polyurea polymers preferably contain di- or higher-functional polyester polyols A) based on linear dicarboxylic acids and/or their derivatives, such as anhydrides, esters or acid chlorides, and aliphatic or cycloaliphatic, linear or branched polyols. Particular preference is given to dicarboxylic acids selected from the group consisting of adipic acid, succinic acid, sebacic acid and dodecanedioic acid; adipic acid is most particularly preferred as component A). These are used in amounts of at least 80 mol%, preferably from 85 to 100 mol%, particularly preferably from 90 to 100 mol%, based on the total amount of all carboxylic acids.

Other aliphatic, cycloaliphatic or aromatic dicarboxylic acids can optionally be used concomitantly. Examples of such dicarboxylic acids are glutaric acid, azelaic acid, 1,4-, 1,3- or 1,2-cyclohexanedicarboxylic acid, terephthalic acid or isophthalic acid. These are used in amounts not exceeding 20 mol%, preferably from 0 to 15 mol%, particularly preferably from 0 to 10 mol%, based on the total amount of all carboxylic acids.

Preferred polyol components for the polyesters A) are selected from the group consisting of monoethylene glycol, 1,3-propanediol, 1,4-butanediol, 1,5-pentanediol, 1,6-hexanediol and neopentyl glycol; 1,4-butanediol and 1,6-hexanediol are particularly preferred as the polyol component, and 1,4-butanediol is most particularly preferred. These are used in amounts of preferably at least 80 mol%, particularly preferably from 90 to 100 mol%, based on the total amount of all polyols.

Other aliphatic or cycloaliphatic, linear or branched polyols can optionally be used concomitantly. Examples of such polyols are diethylene glycol, hydroxypivalic acid neopentyl glycol, cyclohexanedimethanol, 1,5-pentanediol, 1,2-pentanediol, 1,9-nonanediol, trimethylolpropane, glycerol or pentaerythritol. These are used in amounts preferably not exceeding 20 mol%, particularly preferably from 0 to 10 mol%, based on the total amount of all polyols.

Mixtures of two or more such polyesters A) are also suitable.

Polyesters A) based on adipic acid and 1,4-butanediol or adipic acid and 1,6-hexanediol or adipic acid and a mixture of 1,6-hexanediol and neopentyl glycol are preferably used.

The polyurethane dispersions according to the invention have solids contents of preferably from 15 to 70 wt.%, particularly preferably from 25 to 60 wt.%, most particularly preferably from 30 to 50 wt.%. The pH value is preferably in the range from 4 to 11, particularly preferably from 6 to 10.

The aqueous polyurethane or polyurethane-urea dispersions according to the invention can be prepared by reacting components A), B), optionally C) and optionally E) in a one- or two-stage reaction to give an isocyanate-functional prepolymer, which is subsequently reacted in a one- or two-stage reaction optionally with component C) and optionally D) and is then dispersed in or with water, it being possible for some or all of any solvent used concomitantly to be removed by distillation during or after the dispersion.

The preparation of the aqueous polyurethane or polyurethane-urea dispersions according to the invention can be carried out in one or more stages in homogeneous phase or, in the case of a multistage reaction, partly in disperse phase. When the polyaddition has been carried out completely or partially, a dispersing, emulsifying or dissolving step takes place. A further polyaddition or modification in disperse phase is then optionally carried out. All the processes known from the prior art can be used for the preparation, such as the emulsifier/shear force, acetone, prepolymer mixing, melt emulsification, ketimine and solids spontaneous dispersion processes or derivatives thereof. A summary of these methods is to be found in Methoden der organischen Chemie (Houben-Weyl, Erweiterungs- und Folgebände zur 4. Auflage, Volume E20, H. Bartl and J. Falbe, Stuttgart, New York, Thieme 1987, p. 1671-1682). The melt emulsification, prepolymer mixing and acetone processes are preferred. The acetone process is particularly preferred.

In principle, it is possible to weigh in all the hydroxyl-functional components, then add all the isocyanate-functional components and react the mixture to give an isocyanate-functional polyurethane, which is then reacted with the amino-functional components. A reverse preparation, introduction of the isocyanate component into a reaction vessel, addition of the hydroxyl-functional components, reaction to give the polyurethane and then reaction with the amino-functional components to give the end product, is also possible.

Usually, all or some of the hydroxyl-functional components A), optionally C) and optionally E) for preparing a polyurethane prepolymer are placed in a reactor, optionally diluted with a solvent that is miscible with water but inert towards isocyanate groups, and then homogenised. Component B) is then metered in at from room temperature to 120°C, and an isocyanate-functional polyurethane is prepared. This reaction can take place in one stage or in several stages. A one-stage reaction can be carried out, for example, by placing a component C) and/or E) in a reactor and, after reaction with the isocyanate-functional component B), adding a component A), which is then able to react to completion with some of the isocyanate groups still present.

Suitable solvents are, for example, acetone, methyl isobutyl ketone, butanone, tetrahydrofuran, dioxane, acetonitrile, dipropylene glycol dimethyl ether and 1-methyl-2-pyrrolidone, which can be added not only at the beginning of the preparation but optionally, in portions, also later. Acetone and butanone are preferred. It is possible to carry out the reaction under normal pressure or elevated pressure.

For the preparation of the prepolymer, the amounts of the hydroxyl- and optionally amino-functional components used are such that an isocyanate index of preferably from 1.05 to 2.5, particularly preferably from 1.15 to 1.95, most particularly preferably from 1.2 to 1.7, results.

The further reaction, the so-called chain extension, of the isocyanate-functional prepolymer with further hydroxyl- and/or amino-functional, preferably only amino-functional, components D) and optionally C) is carried out in such a manner that a degree of reaction of preferably from 25 to 150 %, particularly preferably from 40 to 85 %, hydroxyl and/or amino groups, based on 100 % isocyanate groups, is chosen.

In the case of degrees of reaction over 100 %, which are possible but less preferred, it is appropriate first to react all the components that are monofunctional within the meaning of the isocyanate addition reaction with the prepolymer and then use the di- or higher-functional chain extension components to obtain as complete incorporation of all the chain extension molecules as possible.

The degree of reaction is usually monitored by following the NCO content of the reaction mixture. To that end, both spectroscopic measurements, for example infrared or near-infrared spectra, determination of the refractive index, and chemical analyses, such as titrations of removed samples, can be carried out.

In order to accelerate the isocyanate addition reaction, conventional catalysts as are known to the person skilled in the art for accelerating the NCO-OH reaction can be used. Examples are triethylamine, 1,4-diazabicyclo-[2,2,2]-octane, dibutyltin oxide, tin dioctoate or dibutyltin dilaurate, tin bis-(2-ethylhexanoate), zinc dioctoate, zinc bis-(2-ethylhexanoate) or other organometallic compounds.

The chain extension of the isocyanate-functional prepolymer with component D) and optionally C) can be carried out prior to the dispersion, during the dispersion or after the dispersion. Preferably, the chain extension takes place prior to the dispersion. If component C) is used as chain extension component, chain extension with that component prior to the dispersing step is essential.

The chain extension is usually carried out at temperatures of from 10 to 100°C, preferably from 25 to 60°C.

The term chain extension within the scope of the present invention also includes the reactions optionally of monofunctional components D) which, owing to their monofunctionality, act as chain terminators and accordingly lead not to an increase but to a limitation of the molecular weight.

The components of the chain extension can be diluted with organic solvents and/or with water when they are added to the reaction mixture. They can be added in succession in any desired sequence or simultaneously by addition of a mixture.

In order to prepare the polyurethane dispersion, the prepolymer, optionally with pronounced shear, such as, for example, vigorous stirring, is either introduced into the dispersing water or, *vice versa,* the dispersing water is stirred into the prepolymer. Chain extension can then be carried out if it has not already taken place in the homogeneous phase.

During and/or after the dispersion, the organic solvent, for example acetone, which has optionally been used can be distilled off.

A preferred preparation process is that described below:
Component A), optionally component C) and optionally component E) and optionally solvent are placed in a reactor and heated to from 20 to 100°C. Component B) is metered in as quickly as possible, with stirring. Using the heat of reaction, the reaction mixture is stirred at from 40 to 150°C until the isocyanate content reaches or is slightly below the theoretical value. A catalyst can optionally be added. The mixture is then diluted to solids contents of from 25 to 95 wt.%, preferably from 35 to 80 wt.%, by addition of solvent, and then the chain extension is carried out by addition of component D) diluted with water and/or solvent, optionally together with component C), at from 30 to 120°C. After a reaction time of from 2 to 60 minutes, dispersion is carried out by addition of distilled water or by transfer into distilled water in a vessel, and some or all of the solvent used is distilled off during or after the dispersing step.

The dispersions according to the invention can be used on their own or together with binders, auxiliary substances and additives known in coating and adhesives technology, in particular emulsifiers and light stabilisers, such as UV absorbers and sterically hindered amines (HALS), also antioxidants, fillers and auxiliary substances, for example antisettling agents, antifoams and/or wetting agents, flow improvers, reactive diluents, plasticisers, neutralising agents, catalysts, auxiliary solvents and/or thickeners, and additives such as, for example, pigments, colourings or mattifying agents. Tackifiers can also be added.

The additives can be added to the products according to the invention immediately prior to processing. It is, however, also possible to add at least some of the additives before or during the dispersion of the binder.

The choice and metered addition of these substances, which can be added to the individual components and/or to the mixture as a whole, are known in principle to the person skilled in the art and can be determined and tailored to the specific application without undue outlay by means of simple preliminary tests.

Photoinitiators are initiators which are activatable by actinic radiation and initiate radical polymerisation of the ethylenically unsaturated compounds. The activating radiation is actinic, for example UV and/or visible light having a wavelength of from 200 to 750 nm, preferably from 200 to 600 nm and particularly preferably from 200 to 500 nm.

Photoinitiators are commercially marketed compounds known *per se,* a distinction being made between unimolecular (type I) and bimolecular (type II) initiators. (Type I) systems are, for example, aromatic ketone compounds, such as benzophenones in combination with tertiary amines, alkylbenzophenones, 4,4'-bis(dimethylamino)benzophenone (Michler's ketone), anthrone and halogenated benzophenones or mixtures of the mentioned types. Also suitable are (type II) initiators, such as benzoin and its derivatives, benzil ketals, acylphosphine oxides, for example 2,4,6-trimethyl-benzoyl-diphenylphosphine oxide, bisacylphosphine oxides, phenylglyoxylic acid esters, camphorquinone, α-aminoalkylphenones, α,α-dialkoxyacetophenones and α-hydroxyalkylphenones. It can also be advantageous to use mixtures of these compounds. Suitable initiators are obtainable commercially, for example under the name Irgacure® and Darocur® (Ciba, Basel, CH) and Esacure® (Fratelli Lamberti, Adelate, IT).

Photoinitiators are used in concentrations which are known to the person skilled in the art and/or are optionally to be determined in simple preliminary tests. Particular consideration is to be given to the wavelength, intensity and dose of the UV radiation and the oxygen content over the primer in the irradiation. Preference is given to concentrations of from 0.1 wt.% to 10 wt.%, particularly preferably from 1.0 wt.% to 4.5 wt.%, in each case based on the solids content of the primer.

In an alternative embodiment, the polyurethane, polyurea or polyurethane-polyurea polymer contains ethylenically unsaturated double bonds. The incorporation of those groups into the polymer is preferably effected *via* the proportionate use of hydroxy-functional components A), C) or E) which contain acrylate and/or methacrylate groups [referred to as (meth)acrylate hereinbelow] in the preparation of the polymers. Preferred hydroxy-functional (meth)acrylates are selected from the group consisting of 2-hydroxyethyl (meth)acrylate, polyethylene oxide mono(meth)acrylates, polypropylene oxide mono(meth)acrylates, polyalkylene oxide mono(meth)acrylates, poly(ε-caprolactone) mono(meth)acrylates, such as Pemcure^{®} 12A (Cognis, Düsseldorf, DE), 2-hydroxypropyl (meth)acrylate, 4-hydroxybutyl (meth)acrylate, 3-hydroxy-2,2-dimethylpropyl (meth)acrylate, and the acrylic acid and/or methacrylic acid partial esters of polyhydric alcohols such as trimethylolpropane, glycerol, pentaerythritol, dipentaerythritol, sorbitol, ethoxylated, propoxylated or alkoxylated trimethylolpropane, glycerol, pentaerythritol, dipentaerythritol or commercial mixtures thereof. Acrylic acid esters of monoalcohols are particularly preferred. Also suitable are alcohols which can be obtained from the reaction of acids containing double bonds with monomeric epoxide compounds optionally containing double bonds, for example the reaction products of (meth)acrylic acid with glycidyl (meth)acrylate or the glycidyl ester of versatic acid.

It is further possible to use isocyanate-reactive oligomeric or polymeric unsaturated compounds containing (meth)acrylate groups, on their own or in combination with the above-mentioned monomeric compounds. Preference is given to the use of hydroxyl-group-containing polyester acrylates having an OH content of from ≥ 30 mg KOH/g to ≤ 300 mg KOH/g, particularly preferably from ≥ 60 mg KOH/g to ≤ 200 mg KOH/g, most particularly preferably from ≥ 70 mg KOH/g to ≤ 120 mg KOH/g. A total of 7 groups of monomer constituents can be used in the preparation of the hydroxy-functional polyester acrylates:
1. (Cyclo)alkanediols such as dihydric alcohols having (cyclo)aliphatically bonded hydroxyl groups with a molecular weight in the range from ≥ 62 g/mol to ≤ 286 g/mol, for example ethanediol, 1,2- and 1,3-propanediol, 1,2-, 1,3- and 1,4-butanediol, 1,5-pentanediol, 1,6-hexanediol, neopentyl glycol, cyclohexane-1,4-dimethanol, 1,2- and 1,4-cyclohexanediol, 2-ethyl-2-butylpropanediol, diols containing ether oxygen, such as, for example, diethylene glycol, triethylene glycol, tetraethylene glycol, dipropylene glycol, tripropylene glycol, polyethylene, polypropylene or polybutylene glycols having a molecular weight of from ≥ 200 g/mol to ≤ 4000 g/mol, preferably from ≥ 300 g/mol to ≤ 2000 g/mol, particularly preferably from ≥ 450 g/mol to ≤ 1200 g/mol. Reaction products of the above-mentioned diols with ε-caprolactone or other lactones can likewise be used as diols.
2. Tri- and higher-hydric alcohols having a molecular weight in the range from ≥ 92 g/mol to ≤ 254 g/mol, such as, for example, glycerol, trimethylolpropane, pentaerythritol, dipentaerythritol and sorbitol, or polyethers started on those alcohols, such as, for example, the reaction product of 1 mol of trimethylolpropane with 4 mol of ethylene oxide.
3. Monoalcohols such as, for example, ethanol, 1- and 2-propanol, 1- and 2-butanol, 1-hexanol, 2-ethylhexanol, cyclohexanol and benzyl alcohol.
4. Dicarboxylic acids having a molecular weight in the range from ≥ 104 g/mol to ≤ 600 g/mol and/or their anhydrides, such as, for example, phthalic acid, phthalic anhydride, isophthalic acid, tetrahydrophthalic acid, tetrahydrophthalic anhydride, hexahydrophthalic acid, hexahydrophthalic anhydride, cyclohexanedicarboxylic acid, maleic anhydride, fumaric acid, malonic acid, succinic acid, succinic anhydride, glutaric acid, adipic acid, pimelic acid, suberic acid, sebacic acid, dodecanedioic acid, hydrogenated dimer fatty acids.
5. Higher-functional carboxylic acids or their anhydrides, such as, for example, trimellitic acid and trimellitic anhydride.
6. Monocarboxylic acids, such as, for example, benzoic acid, cyclohexanecarboxylic acid, 2-ethylhexanoic acid, caproic acid, caprylic acid, capric acid, lauric acid, natural and synthetic fatty acids.
7. Acrylic acid, methacrylic acid or acrylic acid dimer.

Suitable hydroxyl-group-containing polyester acrylates include the reaction product of at least one constituent from group 1 or 2 with at least one constituent from group 4 or 5 and at least one constituent from group 7. Groups having a dispersing action can optionally also be incorporated into such polyester acrylates. Thus, polyethylene glycols and/or methoxypolyethylene glycols can be used proportionately as alcohol component. Compounds which may be mentioned include, for example, alcohol-started polyethylene glycols, polypropylene glycols and their block copolymers, as well as the monomethyl ethers of those polyglycols. Polyethylene glycol 1500 and/or polyethylene glycol 500 monomethyl ether is particularly suitable.

It is further possible to react some of the carboxyl groups, in particular those of (meth)acrylic acid, with mono-, di- or poly-epoxides after the esterification. Preference is given, for example, to the epoxides (glycidyl ethers) of monomeric, oligomeric or polymeric bisphenol A, bisphenol F, hexanediol, butanediol and/or trimethylolpropane or their ethoxylated and/or propoxylated derivatives. This reaction can be used in particular to increase the OH number of the polyester (meth)acrylate because an OH group forms in each case in the epoxide/acid reaction. The acid number of the resulting product is preferably from ≥ 0 mg KOH/g to ≤20 mg KOH/g, particularly preferably from ≥ 1 mg KOH/g to ≤ 10 mg KOH/g and most particularly preferably from ≥ 2 mg KOH/g to ≤ 5 mg KOH/g. The reaction is preferably catalysed by catalysts such as triphenylphosphine, thiodiglycol, ammonium and/or phosphonium halides, and/or zirconium compounds or tin compounds, such as tin(II) ethylhexanoate.

Likewise preferred are hydroxyl-group-containing epoxy (meth)acrylates having OH contents of from ≥ 20 mg KOH/g to ≤ 300 mg KOH/g, particularly preferably from ≥ 100 mg KOH/g to ≤ 280 mg KOH/g, most particularly preferably from ≤ 150 mg KOH/g to ≤ 250 mg KOH/g, or hydroxyl-group-containing polyurethane (meth)acrylates having OH contents of preferably from ≥ 20 mg KOH/g to ≤ 300 mg KOH/g, particularly preferably from ≥ 40 mg KOH/g to ≤ 150 mg KOH/g, most particularly preferably from ≥ 50 mg KOH/g to ≤ 100 mg KOH/g, as well as mixtures thereof with one another and mixtures with hydroxyl-group-containing unsaturated polyesters as well as mixtures with polyester (meth)acrylates or mixtures of hydroxyl-group-containing polyesters with polyester (meth)acrylates. Hydroxyl-group-containing epoxy (meth)acrylates are based in particular on reaction products of acrylic acid and/or methacrylic acid with epoxides (glycidyl compounds) of monomeric, oligomeric or polymeric bisphenol A, bisphenol F, hexanediol and/or butanediol or their ethoxylated and/or propoxylated derivatives.

Ethylenically unsaturated compounds are preferably selected from the group consisting of esters of acrylic acid, esters of methacrylic acid, esters of crotonic acid, vinyl ethers, vinyl esters and vinyl aromatic compounds. Preferably, the ethylenically unsaturated compounds contain aromatic or cycloaliphatic groups. They usually have a molecular weight below 500 g/mol. Particular preference is given to esters of acrylic and methacrylic acid, in particular those having a functionality of acrylic and/or methacrylic acid groups [referred to as "(meth)acrylate" hereinbelow] of 2 or less. Corresponding compounds can be used on their own or in a mixture.

Vinyl esters of carboxylic acids having from 1 to 20 carbon atoms are, for example, vinyl laurate, vinyl stearate, vinyl propionate, versactic acid vinyl esters and vinyl acetate. Examples of vinyl ethers which may be mentioned include vinyl methyl ether or vinyl isobutyl ether. Vinyl ethers of alcohols containing from 1 to 4 carbon atoms are preferred. There come into consideration as vinyl aromatic compounds vinyltoluene, o- and p-methylstyrene, o-butylstyrene, 4-n-butylstyrene, 4-n-decylstyrene and preferably styrene.

Most particular preference is given to ethylenically unsaturated compounds which have a cycloaliphatic or aromatic group. Such ethylenically unsaturated compounds are selected, for example, from the group consisting of phenoxyethyl (meth)acrylate, phenoxy(ethoxy)ₙ-ethyl (meth)acrylate, bisphenol A ethoxylate ethyl (meth)acrylate having mean degrees of ethoxylation of n = from 0.1 to 4.0, cyclohexyl (meth)acrylate, the isomeric tert-butylcyclohexyl (meth)acrylates, norbornyl, isobornyl, dicyclopentadienyl or tetrahydrofurfuryl (meth)acrylate, cyclic trimethylolpropaneformal (meth)acrylate, tricyclodecanedimethanol di(meth)acrylate. Yet further preferred are tetrahydrofuran (meth)acrylate, tricyclodecanedimethanol di(meth)acrylate and dicyclopentadienyl (meth)acrylate.

The ethylenically unsaturated compound or the mixture of ethylenically unsaturated compounds is used in amounts of from ≥ 5.0 wt.% to ≤ 50 wt.%, particularly preferably from ≥ 10.0 wt.% to ≤ 30.0 wt.%, based on the polymer.

The incorporation of the ethylenically unsaturated compounds and the photoinitiator can be carried out in various ways. Both can be incorporated alone or together at various points during or after the preparation of the polymer. If solid photoinitiators are used, the ethylenically unsaturated compound can preferably first be used as solvent for the photoinitiator(s). It is possible to use the ethylenically unsaturated compound and/or the photoinitiator as a solvent in the preparation of the polymer and to emulsify it in water with the polymer. The prepolymer mixing process and the melt dispersing process are suitable in particular for using the ethylenically unsaturated compound and/or the photoinitiator as a solvent and thus lowering the viscosity of the polymer/prepolymer melt or solution, which is advantageous for the formation of the emulsion. If the ethylenically unsaturated compounds or the photoinitiator have functional groups which also react in the preparation of the polymer, addition of the corresponding compound can take place after the synthesis of the polymer.

It is, however, likewise possible subsequently to incorporate the photoinitiators and/or ethylenically unsatured compound into the emulsion of the polymer in water. Shear forces are necessary, which can be applied by means of stirrers, dispersers and mixers, in particular static mixers. In terms of method, these are known processes for incorporating hydrophobic or partially hydrophilic liquids into polymer emulsions. It is possible, but not preferred, to assist the incorporation by means of auxiliary substances such as emulsifiers or substances which are capable of forming protective colloids.

In a further embodiment it is possible to incorporate into the primer according to the invention, in a subordinate amount, up to 30 wt.% of further polymers, in particular polymers which are emulsified or emulsifiable in water. Examples are modified polyolefins, less preferably also halogenated polyolefins, polyvinyl acetates or alcohols, as well as copolymers thereof, poly(meth)acrylates and/or polystyrene-poly(meth)acrylate copolymers.

The primers according to the invention can contain additives and/or auxiliary substances and/or solvents conventional in adhesives, surface coatings, paints and printing inks technology. Such substances are in particular stabilisers, antiageing agents, light stabilisers such as UV absorbers and sterically hindered amines (HALS), also antioxidants as well as auxiliary substances, for example antisettling agents, antifoams and/or wetting agents, flow improvers, plasticisers, antistatics, catalysts and/or rheology-controlling additives, such as thickeners, as well as pigments and/or colourings.

The use of solvents is not preferred and they are used - if at all - in subordinate amounts.

There can be used as fillers mineral fillers, optionally also glass fibres, carbon blacks, nanoscale materials, such as silica sol or aluminium oxides or other metal oxides, carbon nanotubes (for example Baytubes®, Bayer MaterialScience AG, Leverkusen).

The primer used according to the invention preferably has a solids content of from 1 to 75 wt.%. The solids content and viscosity of the primer are to be adapted in particular to the application method and the desired film layer obtained after drying. The solids content can be adjusted within wide ranges, in particular in the range from 3 to 55 wt.%, depending on the substances used, by preparing a concentrated dispersion and subsequently diluting it with water. The viscosity and other rheological properties can be controlled within wide ranges, as is known and conventional in aqueous coating technology, by means of conventional thickeners and/or additives for altering the rheology. Preferably, for application by means of brush coating, the primer is adjusted to a solids content of preferably from 3 to 40 wt.%, particularly preferably from 5 to 25 wt.%, and to be Newtonian or slightly shear-thinning in respect of the rheological properties. The primer accordingly has a complex viscosity, which corresponds at least to that of water.

Preference is given to a method for joining articles comprising at least the following steps
I) coating an article with an aqueous dispersion comprising
   a) at least one polymer selected from the group consisting of polyurethanes, polyureas and polyurethane-polyureas,
   b) at least one ethylenically unsaturated compound and
   c) at least one photoinitiator
      as primer;
II) removing water;
III) irradiating with actinic radiation;
IV) coating the article with a heat-activatable adhesive comprising at least one aqueous dispersion comprising at least one polymer selected from the group consisting of polyurethanes, polyureas and polyurethane-polyureas;
V) removing water;
VI) supplying heat; and
VII) bringing the article into contact with itself or with a further article which has optionally been treated according to method steps I) to VI) or IV) to VI).

The primer can be applied in step I) to the whole of the surface or to only part of the surface of the article.

Before the substrate is coated with the primer according to the invention in step I), it can optionally be subjected to one or more pretreatments. The surfaces to be bonded are preferably cleaned of dust, dirt, grease and any adhered demoulding agents from the production of the substrate. This cleaning can be carried out by washing and/or mechanical influences. Solvents or, preferably, aqueous cleaning solutions can be used for washing. Washing is markedly more effective when combined with mechanical action such a wiping, brushing, irradiation or ultrasound treatment. Further treatment of the surface with high-energy radiation, in particular ionising radiation such as plasma, or activation of the surface by means of ozone or mechanical roughening can be advantageous in special cases.

Application of the primer according to the invention in step I) is preferably carried out by means of brushing, dipping or spraying. Also possible are roller application, knife application, flooding, pouring, printing processes and transfer processes. The application should take place with the exclusion of radiation, which can lead to premature polymerisation of the double bonds in the primer.

In step II), the water is removed. The removal of water is preferably carried out by drying at elevated temperatures in ovens and with moving and optionally also dehumidified air (convection ovens, spray driers) as well as heat radiation (IR, NIR). Microwaves can also be used. It is possible and advantageous to combine several of these drying methods.

Advantageously, the conditions for drying are so chosen that the maximum temperature achieved remains below the limit at which the substrate is deformed uncontrollably or suffers other damage.

In step III), the article is exposed to actinic radiation. The heat energy introduced into the primer layer during drying is advantageously used.

Radiation curing is preferably carried out by the action of high-energy radiation, that is to say UV radiation or daylight, preferably light of wavelength from ≥ 200 nm to ≤ 750 nm, or by irradiation with high-energy electrons (electron radiation, for example from ≥ 90 keV to ≤ 300 keV). The radiation sources used for light or UV light are, for example, medium- or high-pressure mercury vapour lamps, it being possible for the mercury vapour to be modified by doping with other elements, such as gallium or iron. Laser, pulsed lamps (known by the name UV flashlight radiators), halogen lamps or excimer radiators can likewise be used. The radiators can be installed in a stationary manner, so that the article to be irradiated is moved past the radiation source by means of a mechanical device, or the radiators can be movable, and the article to be irradiated does not change its location during curing. The radiation dose that is conventionally sufficient for crosslinking in the case of UV curing is in the range from ≥ 80 mJ/cm² to ≤ 5000 mJ/cm² at a radiation intensity of from ≥ 80 mW/cm² to ≤ 3000 mW/cm².

The irradiation can optionally also be carried out with the exclusion of oxygen, for example under an inert gas atmosphere or an oxygen-reduced atmosphere. Suitable inert gases are preferably nitrogen, carbon dioxide, noble gases or combustion gases. Furthermore, the irradiation can be carried out by covering the dried primer layer with media that are transparent to the radiation. Examples thereof are plastics films, glass or liquids such as water.

Depending on the radiation dose, radiation intensity, spacing and further curing conditions, the type and concentration of the initiator used in the primer are to be varied or optimised in a manner known to the person skilled in the art or by preliminary tests. For curing of the dried primer on three-dimensional surfaces of complex shape it is particularly advantageous to carry out the curing with a plurality of radiators, the arrangement of which is to be so chosen that, where possible, each point of the coating receives the optimum dose and intensity of radiation for curing. In particular, nonirradiated areas (shadow zones) are to be avoided.

In order for the polymerisation of the double bonds in the dried primer to be as complete as possible, it has proved advantageous for the temperatures in the irradiation to be as high as possible and for the intensity and dose to be as high as possible. On the other hand, it can be advantageous, depending on the article used, to choose the irradiation conditions so that the thermal load on the article does not become too great. In particular thin articles or articles made of materials having a low glass transition temperature can have a tendency to uncontrolled deformation if a particular temperature is exceeded as a result of the irradiation. In such cases it is advantageous, by means of suitable filters or a suitable construction of the radiators, to allow as little infrared radiation as possible to act on the article. Furthermore, uncontrolled deformation can be counteracted by reducing the corresponding radiation dose. It must be noted, however, that a specific dose and intensity of the radiation are necessary in order for polymerisation to be as complete as possible. It is particularly advantageous in such cases to carry out curing under inert or oxygen-reduced conditions, because the dose required for curing decreases when the oxygen content in the atmosphere above the dried primer is reduced.

Mercury radiators in stationary installations are particularly preferably used for curing. For curing these coatings, a dose of from ≥ 200 mJ/cm² to ≤ 2000 mJ/cm² with a radiation intensity of from ≥ 200 mW/cm² to ≤ 2000 mW/cm² is preferably used.

In step IV), an adhesive is applied. In a preferred embodiment of this invention, the adhesive is an aqueous, heat-activatable adhesive comprising at least one polymer selected from the group of the polyurethanes, polyureas or polyurethane-polyureas. Neither the choice of adhesive nor the constituents present therein nor the application method offer distinctive features over the prior art; rather, the use of the primer within the scope of the method according to the invention allows conventional adhesives of the prior art to be used even on substrates to which such adhesives adhere only unsatisfactorily without a primer.

It is also possible to use as the adhesive two-component (2K) adhesive compositions containing the dispersions according to the invention and at least one polyisocyanate compound having at least two isocyanate groups per molecule. The polyisocyanate is added prior to use (2K processing). Preference is given in this case to the use of polyisocyanate compounds which are emulsifiable in water. These are, for example, the compounds described in EP-A 0 206 059, DE-A 31 12 117 or DE-A 100 24 624. The polyisocyanate compounds are used in an amount of from 0.1 to 20 wt.%, preferably from 0.5 to 10 wt.%, particularly preferably from 1.5 to 6 wt.%, based on the aqueous dispersion.

In step V), the water is removed. The removal of water is preferably carried out by drying at elevated temperatures in ovens and with moving and optionally also dehumidified air (convection ovens, spray driers) as well as heat radiation (IR, NIR). Microwaves can also be used. It is possible and advantageous to combine several of these drying methods. Advantageously, the conditions for drying are so chosen that the maximum temperature achieved remains below the limit at which the substrate is deformed uncontrollably or suffers other damage.

In step VI), the two articles are joined with the application of pressure and optionally at elevated temperatures. Joining itself does not offer any distinctive features in terms of method but corresponds to the prior art. The conditions under which joining takes place are to be adapted to the adhesive layers and substrates used. They can be determined by the person skilled in the art in suitable tests.

Joining can optionally be followed by heat treatment, in which the adhesive bond is maintained at an elevated temperature in order to cause any crosslinkers present to react. Furthermore, cooling can be carried out, by means of which the joined articles are cooled to ambient temperature again.

Suitable crosslinkers are preferably polyisocyanates, also in the form of latent-reactive or blocked polyisocyanates, polyaziridines and polycarbodiimides, and optionally also melamines. Hydrophilised polyisocyanates are particularly preferred for aqueous coating compositions. The amount and the functionality of the crosslinkers is to be matched in particular to the desired strength of the adhesive bond in particular under thermal loading and is optionally to be determined by means of simple tests. Furthermore, the temperature necessary for the reaction of the crosslinker in the adhesive during curing is to be matched to the drying and curing process when choosing the crosslinker. Many of the possible crosslinkers reduce the storage life of the coating composition because they already react slowly in the aqueous dispersion. The addition of the crosslinkers should therefore take place correspondingly shortly before application. Depending on the degree of hydrophilicity, appropriate methods known *per* se, such as stirring with appropriate shear force, dispersion or incorporation by means of mixers, are to be used for the incorporation of the crosslinker into the aqueous dispersion. Hydrophilised polyisocyanates are obtainable, for example, under the name Desmodur® and Bayhydur® (Bayer MaterialScience AG, Leverkusen, DE) and Rhodocoat® (Perstorp, SE).

The invention further provides articles produced by the method according to the invention. Articles produced by the method according to the invention are, for example, shoes, in particular sports shoes, sports articles such as balls, racquets and equipment, also furniture, textiles, films and composites thereof, articles from the computer, telecommnunications and consumer electronics field, motor vehicles and aircraft and in particular parts from the interior.

### Examples:

The present invention is explained in greater detail by means of the following examples. In the examples, the units used have the following meanings:
Isocyanate content: indicated in %, back titration with 0.1 mol/l hydrochloric acid after reaction with butylamine, determined according to DIN EN ISO 11909.
Viscosities: rotary viscometer (Haake, type VT 550), measurements at 23°C and shear gradient - unless indicated otherwise - of D 1/40 s⁻¹.
Unless indicated otherwise, percentages in the examples are wt.%.

In the examples, the compounds indicated by their commercial names mean:
Dispercoll^{®} U 54 - Anionic high molecular weight polyurethane dispersion (about 50 % solids content), Bayer MaterialScience AG, Leverkusen, D (U 54) for the preparation of heat-activatable, aqueous adhesives.
Dispercoll^{®} U XP 2682 - Anionic polyurethane dispersion (about 50 % solids content), Bayer MaterialScience AG, Leverkusen, D (XP 2682) for the preparation of aqueous adhesives which are heat-activatable at low temperatures.
Desmodur^{®} DN - Hydrophilic aliphatic polyisocyanate emulsifiable in aqueous polymer dispersions, based on hexamethylene diisocyanate (HDI). NCO content 21.8 %; viscosity 1250 mPa s. Bayer MaterialScience AG, Leverkusen, D.
Borchi^{®} Gel L 75 N - polyurethane-based, non-ionic, liquid thickener. OMG Borchers GmbH, Langenfeld, D.
Irgacure^{®} 500, Irgacure 819 DW, Lucirin® TPO-L - photoinitiators, BASF SE, Ludwigshafen, D.
Esacure^{®} TZT - photoinitiator, Fratelli Lamberti SpA, Adelate, IT.

The following monomers were obtained from SARTOMER division of CRAY VALLEY, F-92062 PARIS LA DEFENSE CEDEX - France:

| | |
|---|---|
| SR256 | 2-(2-ethoxyethoxy)ethyl acrylate (EOEOEA) |
| SR285 | tetrahydrofurfuryl acrylate (THFA) |
| SR339C | 2-phenoxyethyl acrylate (PEA) |
| SR506D | isobornyl acrylate (IBOA) |
| SR423 | isobornyl methacrylate (IBOMA) |
| SR833S | tricyclodecanedimethanol diacrylate (TCDDA) |

The following monomers were obtained from BASF SE, Ludwigshafen, D:

| | |
|---|---|
| Laromer^{®} DCPA | dihydrocyclopentadienyl acrylate (DCPA) |
| Laromer^{®} HDDA | 1,6-hexanediol diacrylate (HDDA) |

### Substrates:

EVA1 - Injection moulded EVA-Midsole-Phylon having a vinyl acetate content of about 16 %
EVA2 - Compression moulded EVA-Midsole-Phylon having a vinyl acetate content of about 20 %
EVA3 - Injection moulded EVA-Midsole-Phylon having a vinyl acetate content of about 18 %
Leather-Test substrate: SATRA Standard-Upper-Leather (SATRA UK)
Rubber - black shoe-sole rubber of NBR (based on 73% polybutadiene rubber BR150L from Ube Industries Ltd.)

Determination of the melt enthalpy of the melting peak of the anionic polyurethane dispersions by means of differential scanning calorimetry (DSC)- DIN 65467-A

Dried polymer films of Dispercoll^{®} U 54 and Dispercoll^{®} U XP 2682 were produced by pouring dispersions into Teflon dishes and then drying for seven days at room temperature. Pieces having a mass of 10 mg were cut out of the films and introduced into DSC crucibles, which were then closed with lids in the crucible press. The crucibles were placed at RT in the measuring cell of the calorimeter and cooled to -100°C. Heating in the temperature range from -100°C to +100°C was carried out three times. The heating rate is 20 K/min, cooling at 320 K/min is carried out between the heating cycles. Thermal coupling of the cooling block and the measuring cell is effected by rinsing with nitrogen, a compressor cools the measuring cell.

For Dispercoll^{®} U 54, a melting peak was found at +48.5°C with a melt enthalpy of 51.3 J/g, while XP 2682 exhibited a peak at +51.0°C with a melt enthalpy of 64.5 J/g (values from the 1st heating in each case).

### Preparation of a UV-curing polyurethane dispersion (UVPUD)

210.3 g of the hydroxy-functional polyester acrylate Laromer^{®} PE44F (BASF AG, Ludwigshafen, DE), 701.3 g of the C4-polyether Tetrathane Dispercoll^{®} 2000 (Invista, Wichita, USA), 43.6 g of dimethylolpropionic acid, 0.7 g of dibutyltin dilaurate, 390.0 g of acetone were placed in a reaction vessel having a stirrer, an internal thermometer and a gas inlet (air stream 1 1/h); a mixture of 157.0 g of Desmodur Dispercoll^{®} W (cycloaliphatic diisocyanate; Bayer MaterialScience AG, Leverkusen, DE) and 80.3 g of Desmodur^{®} H (aliphatic diisocyanate; Bayer MaterialScience AG, Leverkusen, DE) were added, and the mixture was heated so that a constant acetone reflux prevailed. Stirring was carried out at that temperature until the reaction mixture had an NCO content of 1.6 %.

The mixture was then cooled to 40°C, and 33.6 g of ethyldiisopropylamine were added. After 5 minutes' stirring at 40°C, the reaction mixture was poured into 2250 g of water at 20°C, with rapid stirring. 42.6 g of isophoronediamine in 125.0 g of water were then added.

After 30 minutes' stirring without heating or cooling, the product was distilled *in vacuo* (50 mbar, max. 50°C) until a solids content of 35 wt.% was reached. The dispersion has a pH value of 8.3 and a mean particle size of 100 nm (laser correlation spectroscopy measurement: Zetasizer^{®} 1000, Malvern Instruments, Malvern, UK). Flow time in a 4 mm beaker: 18 s.

### Preparation of a mixture of a polyurethane dispersion, a UV-curable (meth)acrylate monomer and photoinitiator(s)

The amount of the mentioned polyurethane dispersion indicated in the test table in question was placed in a vessel, and the amount of the mentioned monomer indicated in the test table in question was added, with intensive stirring. After 5 minutes' stirring, the amount of the mentioned photoinitiator indicated in the test table in question was added, likewise with intensive stirring. The solids content indicated in the table was then established with demineralised water. After 5 minutes' stirring, the formulation was left to stand overnight.

### Preparation of an aqueous, heat-activatable, post-crosslinking adhesive

100.0 g of Dispercoll^{®} U 54 were placed in a reaction vessel, and 4.0 g of Desmodur^{®} DN were added, with intensive stirring. After 5 minutes' stirring, 1.0 g of a 20 % solution of Borchi^{®} Gel L 75 N in water was added, likewise with intensive stirring. After 5 minutes' stirring, the formulation was left to stand for 30 minutes. The viscosity was then 1250 mPa s. The adhesive formulation was consumed within 2.5 hours of manufacture owing to the pot life induced by the crosslinker isocyanate Desmodur^{®} DN.

### Preparation of an aqueous cleaning solution

50.0 g of sodium hydroxide, 10.0 g of a domestic washing-up liquid Falterol^{®} (cleaning agent concentrate with 30 % active substance, Falter Chemie GmbH & CO KG, Krefeld), 50.0 g of isopropanol and 890.0 g of water were mixed and dissolved.

### Pretreatment of EVA or rubber substrates

### Variant A: using solvent

Surfaces to be bonded were cleaned with a cellulose cloth impregnated with ethyl acetate, by wiping five times with the application of slight pressure. The surfaces were then left uncovered in a well ventilated location for at least one hour.

### Variant B: using the aqueous cleaning solution

Surfaces to be bonded were immersed in the aqueous cleaning solution in an ultrasound bath and cleaned with ultrasound for 10 minutes. The solution was then allowed to drip off the surfaces, and the surfaces were briefly immersed in a 5 % aqueous solution of citric acid. After allowing the solution to drip off again, the surfaces were rinsed once with demineralised water and left uncovered in a well ventilated location for at least one hour.

### Application of a primer to EVA or rubber, drying and UV irradiation

The primers mentioned in the test table in question were applied to the substrate as thinly and evenly as possible by means of a fine brush (China brush). Drying was then carried out for a short time at 30°C in a circulating air oven until the water was removed from the film. In different forms of the test, a layer thickness of approximately from 5 µm to 10 µm was obtained. UV irradiation was carried out with a medium-pressure mercury radiator (adjustable lamp power 60, 80 or 120 W/cm lamp length). Unless indicated otherwise, irradiation was carried out immediately after drying of the primer at 120 W/cm and a peak intensity of 1700 mW/cm² and a dose of 1200 mJ/cm² (measured with an IL 390 C dosimeter from International Light Inc.).

### Bonding of an EVA or rubber substrate to leather

A strip of an EVA or rubber substrate according to the test table having a width of 3 cm and a length of 10 cm was coated, after cleaning according to the test table and optional coating with a primer, with the aqueous, heat-activatable, post-crosslinking adhesive. A piece of leather having an equal area was coated twice in succession with the adhesive. Application was by means of a fine brush (China brush) with approximately 150 g/m² (wet). After each application, the adhesives were dried for 5 minutes at 65°C in a circulating air oven and activated by means of heat and, after the two surfaces coated with adhesive had been placed together, immediately pressed with a flat press (PROTOS Schuhmaschinen Frankfurt a. M., D, 4 bar line pressure, 30 s).

The strength of the adhesive bond was tested after 3 days by means of a peel test (180° peel with 100 mm/min tensile speed according to DIN EN 1392). In the test it was assessed whether the material on the substrates tears (positive result) or whether the bond separates (negative result).

**Test table 1: Influence of the monomers and the irradiation**

| | Primer | | | | | Tear test |
|---|---|---|---|---|---|---|
| Example | Polymer | Amount [g] | Monomer | Amount [g] | Substrate | Material torn after 3 days |
| 1(C) | U 54 | 200 | (without) | - | EVA3 | No |
| 2(C) | U 54 | 200 | (without) | - | EVA1 | No |
| 3 | U 54 | 200 | EOEOEA | 20 | EVA3 | Partially |
| 4 | U 54 | 200 | EOEOEA | 20 | EVA1 | No |
| 5 | U 54 | 200 | THFA | 20 | EVA3 | Yes |
| 6 | U 54 | 200 | THFA | 20 | EVA1 | Yes |
| 7 | U 54 | 200 | PEA | 20 | EVA3 | Partially |
| 8 | U 54 | 200 | PEA | 20 | EVA1 | No |
| 9 | U 54 | 200 | DCPA | 20 | EVA3 | Yes |
| 10 | U 54 | 200 | DCPA | 20 | EVA1 | Yes |
| 11 | U 54 | 200 | IBOA | 20 | EVA3 | Partially |
| 12 | U 54 | 200 | IBOA | 20 | EVA1 | No |
| 13 | U 54 | 200 | IBOMA | 20 | EVA3 | Partially |
| 14 | U 54 | 200 | TCDDA | 20 | EVA3 | Yes |
| 15 | U 54 | 200 | TCDDA | 20 | EVA 1 | Yes |
| 16 | U 54 | 200 | HDDA | 20 | EVA 3 | Partially |
| 17 | UVPUD | 200 | TCDDA | 20 | EVA 3 | Yes |
| 18 | UVPUD | 200 | TCDDA | 20 | EVA 1 | Partially |

In all the tests, 2.0 % Irgacure^{®} 500 was used as photoinitiator. The EVA was cleaned with solvent. Application, drying and irradiation of the primer as described above. Then bonding to leather as described above.

The comparison examples 1(C) and 2(C) show that a good adhesive bond is not achieved without monomer. The examples according to the invention show that certain monomers lead to better adhesive bonds depending on the property of the substrate. Tests 17 and 18 show, in comparison with tests 14 and 15, that a polyurethane dispersion in the primer leads to good bonding both with and without UV-reactive groups.

**Test table 2: Influence of the pretreatment of the EVA**

| | Primer | | | | | | Tear test |
|---|---|---|---|---|---|---|---|
| Example | Polymer | Amount [g] | Monomer | Amount [g] | Substrate | Pretreatment | Material torn after 3 days |
| 19(C) | U 54 | 200 | (without) | - | EVA3 | B - aqueous | No |
| 20 (C) | U 54 | 200 | (without) | - | EVA1 | B - aqueous | No |
| 21 | U 54 | 200 | TCDDA | 20 | EVA3 | (without) | Partially |
| 22 | U 54 | 200 | TCDDA | 20 | EVA1 | (without) | No |
| 14 | U 54 | 200 | TCDDA | 20 | EVA3 | A - solvent | Yes |
| 15 | U 54 | 200 | TCDDA | 20 | EVA1 | A - solvent | Yes |
| 23 | U 54 | 200 | TCDDA | 20 | EVA3 | B - aqueous | Yes |
| 24 | U 54 | 200 | TCDDA | 20 | EVA1 | B - aqueous | Yes |

In all the tests, 2.0 % Irgacure^{®} 500 was used as photoinitiator. Application, drying and irradiation of the primer as described above. Then bonding to leather as described above.

Tests 14, 15, 19 (C) to 24 show that cleaning of the EVA material is advantageous, the result achieved with aqueous cleaning being equal to that obtained by wiping with solvent.

**Test table 3: Influence of the amounts of PUD and monomer**

| | Primer | | | | | Tear test |
|---|---|---|---|---|---|---|
| Example | Polymer | Amount [g] | Monomer | Amount [g] | Substrate | Material torn after 3 days |
| 1 (C) | U 54 | 200 | (without) | - | EVA3 | No |
| 2 (C) | U 54 | 200 | (without) | - | EVA1 | No |
| 25 (C) | UVPUD | 200 | (without) | - | EVA3 | No |
| 26 (C) | UVPUD | 200 | (without) | - | EVA1 | No |
| 27 (C) | (without) | * | TCDDA | * | EVA3 | Partially |
| 28(C) | (without) | * | TCDDA | * | EVA1 | No |
| 14 | U 54 | 200 | TCDDA | 20 | EVA3 | Yes |
| 15 | U 54 | 200 | TCDDA | 20 | EVA1 | Yes |
| 29 | U 54 | 200 | TCDDA | 30 | EVA3 | Yes |
| 30 | U 54 | 200 | TCDDA | 30 | EVA1 | Yes |
| 31 | U 54 | 200 | TCDDA | 15 | EVA3 | Yes |
| 32 | U 54 | 200 | TCDDA | 15 | EVA1 | Yes |
| 33 | U 54 | 200 | TCDDA | 10 | EVA3 | Yes |
| 34 | U 54 | 200 | TCDDA | 10 | EVA1 | Partially |
| 35 | U 54 | 200 | TCDDA | 5 | EVA3 | Partially |
| 36 | U 54 | 200 | TCDDA | 5 | EVA1 | No |

| | | | | | | |
|---|---|---|---|---|---|---|
| *)-TCDDA was processed by means of 0.2 % Disponil^{®} FES 32 (emulfisier, Cognis SE, Düsseldorf, D) and an Ultra-Turrax to a 20 % emulsion having limited storage stability. | | | | | | |

In all the tests, 2.0 % Irgacure^{®} 500 was used as photoinitiator. The EVA was cleaned with solvent. Application, drying and irradiation of the primer as described above. Then bonding to leather as described above.

Tests 1 (C), 2 (C), 14, 15, 25 (C) - 36 show that the combination of PUD and monomer over broad concentration ranges as primer leads to good results, while PUD, UVPUD or monomer on their own do not bring about adequately good bonding.

**Test table 4: Various substrates**

| | Primer | | | | | Tear test |
|---|---|---|---|---|---|---|
| Example | Polymer | Amount [g] | Monomer | Amount [g] | Substrate | Material torn after 3 days |
| 1 (C) | U 54 | 200 | (without) | - | EVA3 | No |
| 2 (C) | U 54 | 200 | (without) | - | EVA1 | No |
| 37(C) | U 54 | 200 | (without) | - | Rubber | No |
| 39(C) | (without) | | | | EVA3 | No |
| 40(C) | (without) | | | | EVA1 | No |
| 41(C) | (without) | | | | Rubber | No |
| 14 | U 54 | 200 | TCDDA | 20 | EVA3 | Yes |
| 15 | U 54 | 200 | TCDDA | 20 | EVA1 | Yes |
| 43 | U 54 | 200 | TCDDA | 20 | EVA2 | Yes |
| 44 | U 54 | 200 | TCDDA | 20 | Rubber | Yes |

In all the tests, 2.0 % Irgacure^{®} 500 was used as photoinitiator. The EVA was cleaned with solvent. Application, drying and irradiation of the primer as described above. Then bonding to leather as described above.

Tests 1 (C), 2 (C), 37 (C) - 42 (C), 14, 15, 43 - 44 show that good bonding does not occur on any substrate without primer or with a primer without a UV-curable monomer, while a primer according to the invention brings about an improvement in the adhesion on various substrates.

## Claims

1. Method for joining articles comprising compounds selected from the group consisting of ethylene vinyl acetate copolymers, rubber, polyolefins and mixtures thereof, comprising at least the following steps
I) coating an article with an aqueous dispersion comprising
a) at least one polymer selected from the group consisting of polyurethanes, polyureas and polyurethane-polyureas,
b) at least one ethylenically unsaturated compound and
c) at least one photoinitiator
as primer;
II) removing water;
III) irradiating with actinic radiation;
IV) coating the article with an adhesive;
V) removing water;
VI) bringing the article into contact with itself or with a further article which has optionally been treated according to method steps I) to V) or IV) to V).

2. Method according to claim 1, wherein the polymer in step I) is crystalline or semi-crystalline.

3. Method according to claims 1 and 2, wherein in the DSC measurement according to DIN 65467 at a heating rate of 20 K/min, the polymer in step I) has a melting peak which corresponds to a melt enthalpy > 3 J/g.

4. Method according to claims 1 to 3, wherein the polymer in step I) contains ethylenically unsaturated double bonds.

5. Method according to claims 1 to 4, wherein the ethylenically unsaturated compound is selected from the group consisting of esters of acrylic acid, esters of methacrylic acid, esters of crotonic acid, vinyl ethers, vinyl esters and vinyl aromatic compounds.

6. Method according to claims 1 to 5, wherein the ethylenically unsaturated compounds contain aromatic or cycloaliphatic groups.

7. Method according to claims 1 to 6, wherein the adhesive is a heat-activatable adhesive containing at least one aqueous dispersion containing at least one polymer selected from the group consisting of polyurethanes, polyureas and polyurethane-polyureas.

8. Method according to claims 1 to 7, wherein the method additionally comprises a step Va) in which heat is supplied to the substrate.

9. Method according to claims 1 to 7, wherein the article is a material selected from the group consisting of ethylene vinyl acetate copolymers, rubber such as SBR (styrene butadiene rubber), NBR (nitrile butadiene rubber), TR (thermoplastic rubber), natural rubber, EPDM (ethylene-propylene-diene rubber), polyolefins and other thermoplastic materials, and mixtures thereof.

10. Articles produced by a method according to claims 1 to 9.

## Patentansprüche

1. Verfahren zum Zusammenfügen von Gegenständen, die Verbindungen aus der Gruppe bestehend aus Ethylen-Vinylacetat-Copolymeren, Kautschuk, Polyolefinen und Mischungen davon umfassen, das mindestens die folgenden Schritte umfasst:
I) Beschichten eines Gegenstands mit einer wässrigen Dispersion, umfassend
a) mindestens ein Polymer aus der Gruppe bestehend aus Polyurethanen, Polyharn-stoffen und Polyurethanpolyharnstoffen,
b) mindestens eine ethylenisch ungesättigte Verbindung und
c) mindestens einen Photoinitiator,
als Grundierung;
II) Entfernen von Wasser;
III) Bestrahlen mit aktinischer Strahlung;
IV) Beschichten des Gegenstands mit einem Klebstoff;
V) Entfernen von Wasser;
VI) Inberührungbringen des Gegenstands mit sich selbst oder mit einem weiteren Gegenstand, der gegebenenfalls gemäß den Verfahrens-schritten I) bis V) oder IV) bis V) behandelt worden ist.

2. Verfahren nach Anspruch 1, wobei das Polymer in Schritt I) kristallin oder teilkristallin ist.

3. Verfahren nach den Ansprüchen 1 und 2, wobei das Polymer in Schritt I) bei der DSC-Messung gemäß DIN 65467 bei einer Heizrate von 20 K/min einen Schmelzpeak aufweist, der einer Schmelzenthalpie > 3 J/g entspricht.

4. Verfahren nach den Ansprüchen 1 bis 3, wobei das Polymer in Schritt I) ethylenisch ungesättigte Doppelbindungen enthält.

5. Verfahren nach den Ansprüchen 1 bis 4, wobei die ethylenisch ungesättigte Verbindung aus der Gruppe bestehend aus Estern von Acrylsäure, Estern von Methacrylsäure, Estern von Crotonsäure, Vinyl-ethern, Vinylestern und vinylaromatischen Verbin-dungen ausgewählt wird.

6. Verfahren nach den Ansprüchen 1 bis 5, wobei die ethylenisch ungesättigten Verbindungen aromatische oder cycloaliphatische Gruppen enthalten.

7. Verfahren nach den Ansprüchen 1 bis 6, wobei es sich bei dem Klebstoff um einen wärmeaktivierbaren Klebstoff handelt, der mindestens eine wässrige Dispersion enthält, die mindestens ein Polymer aus der Gruppe bestehend aus Polyurethanen, Polyharnstoffen und Polyurethanpolyharnstoffen enthält.

8. Verfahren nach den Ansprüchen 1 bis 7, wobei das Verfahren zusätzlich einen Schritt Va) umfasst, bei dem dem Substrat Wärme zugeführt wird.

9. Verfahren nach den Ansprüchen 1 bis 7, wobei es sich bei dem Gegenstand um ein Material aus der Gruppe bestehend aus Ethylen-Vinylacetat-Copolymeren, Kautschuk wie SBR (Styrol-Butadien-Kautschuk), NBR (Nitril-Butadien-Kautschuk), TR (thermoplastischem Kautschuk), Naturkautschuk, EPDM (Ethylen-Propylen-Dien-Kautschuk), Polyolefinen und anderen thermoplastischen Materialien und Mischungen davon handelt.

10. Gegenstand, hergestellt durch ein Verfahren nach den Ansprüchen 1 bis 9.

## Revendications

1. Procédé de liaison d'articles comprenant des composés choisis dans le groupe constitué par les copolymères d'éthylène-acétate de vinyle, le caoutchouc, les polyoléfines et leurs mélanges, comprenant au moins les étapes suivantes :
I) le revêtement d'un article avec une dispersion aqueuse comprenant :
a) au moins un polymère choisi dans le groupe constitué par les polyuréthanes, les polyurées et les polyuréthane-polyurées,
b) au moins un composé éthyléniquement insaturé et
c) au moins un photoinitiateur,
en tant qu'amorce ;
II) l'élimination de l'eau ;
III) l'exposition à un rayonnement actinique ;
IV) le revêtement de l'article avec un adhésif ;
V) l'élimination de l'eau ;
VI) la mise en contact de l'article avec lui-même ou avec un autre article qui a éventuellement été traité selon les étapes de procédé I) à V) ou IV) à V).

2. Procédé selon la revendication 1, dans lequel le polymère à l'étape I) est cristallin ou semicristallin.

3. Procédé selon les revendications 1 et 2, dans lequel, lors de la mesure DSC selon DIN 65467 à un taux de chauffage de 20 K/min, le polymère de l'étape I) présente un pic de fusion qui correspond à une enthalpie de fusion > 3 J/g.

4. Procédé selon les revendications 1 à 3, dans lequel le polymère à l'étape I) contient des doubles liaisons éthyléniquement insaturées.

5. Procédé selon les revendications 1 à 4, dans lequel le composé éthyléniquement insaturé est choisi dans le groupe constitué par les esters de l'acide acrylique, les esters de l'acide méthacrylique, les esters de l'acide crotonique, les éthers de vinyle, les esters de vinyle et les composés aromatiques de vinyle.

6. Procédé selon les revendications 1 à 5, dans lequel les composés éthyléniquement insaturés contiennent des groupes aromatiques ou cycloaliphatiques.

7. Procédé selon les revendications 1 à 6, dans lequel l'adhésif est un adhésif thermo-activable contenant au moins une dispersion aqueuse contenant au moins un polymère choisi dans le groupe constitué par les polyuréthanes, les polyurées et les polyuréthanepolyurées.

8. Procédé selon les revendications 1 à 7, dans lequel le procédé comprend également une étape Va) lors de laquelle de la chaleur est apportée au substrat.

9. Procédé selon les revendications 1 à 7, dans lequel l'article est un matériau choisi dans le groupe constitué par les copolymères d'éthylène-acétate de vinyle, le caoutchouc tel que le SBR (caoutchouc de styrène butadiène), le NBR (caoutchouc de nitrile butadiène), le TR (caoutchouc thermoplastique), le caoutchouc naturel, l'EPDM (caoutchouc d'éthylène-propylène-diène), les polyoléfines et d'autres matériaux thermoplastiques, et leurs mélanges.

10. Articles produits par un procédé selon les revendications 1 à 9.
